# EUROPÄISCHE PATENTSCHRIFT

(11) **EP 3 143 320 B1**
(45) Veröffentlichungstag und Bekanntmachung des Hinweises auf die Patenterteilung: **11.09.2019**
(21) Anmeldenummer: 15721574.0
(22) Anmeldetag: 30.04.2015
(51) Int. Cl.: F16L 39/00, F16L 25/01, H01R 13/00, H01R 13/502

(54) **KUPPLUNGSVORRICHTUNG, INSBESONDERE EINE MEHRFACHKUPPLUNG**
COUPLING DEVICE, IN PARTICULAR A MULTIPLE COUPLING
DISPOSITIF D'ACCOUPLEMENT, EN PARTICULIER À UN RACCORD MULTIPLE

(30) Priorität: 14.05.2014 DE 102014007390
(43) Veröffentlichungstag der Anmeldung: 22.03.2017
(73) Patentinhaber: Eisele Pneumatics GmbH & Co. KG, 71332 Waiblingen (DE)
(72) Erfinder: DEISTER, Viktor, 71570 Oppenweiler (DE); BOLAT, Hakan, 22525 Hamburg (DE)
(74) Vertreter: Bartels und Partner, Patentanwälte
(86) Internationale Anmeldenummer: PCT/EP2015/000884
(87) Internationale Veröffentlichungsnummer: WO 2015/172866

(56) Entgegenhaltungen:
- EP-A2- 1 471 610
- EP-A2- 2 620 688
- CA-A1- 2 243 263

## Beschreibung

Die Erfindung betrifft eine Kupplungsvorrichtung, insbesondere eine Mehrfachkupplung, mit den Merkmalen des Oberbegriffs von Patentanspruch 1.

Das Dokument EP 2 620 688 A2 offenbart eine Mehrfachkupplung mit zusammensteckbaren Kupplungskörpern, die Aufnahmeöffnungen für darin einsetzbare Anschlusseinheiten aufweisen, die beim Zusammenstecken der Kupplungskörper eine Verbindung zwischen betreffenden Leitungsabschnitten herstellen. Neben Aufnahmeöffnungen für Anschlusseinheiten, die mit Druckluft oder Flüssigkeiten führenden Leitungsabschnitten verbunden sind, sind bei der bekannten Mehrfachkupplung auch Aufnahmeöffnungen für Anschlusseinheiten vorgesehen, die eine elektrische Verbindungseinrichtung aufweisen, um beim Zusammenstecken der Kupplungskörper eine Steckverbindung zwischen den Leitungsabschnitten herzustellen.

Bei der aus EP 2 620 688 A2 bekannten Kupplungsvorrichtung zum steckbaren Verbinden mindestens eines ersten Leitungsabschnitts mit einem jeweiligen zweiten Leitungsabschnitt durch Zusammenstecken eines ersten Kupplungskörpers, an dem jeweilige erste Leitungsabschnitte anschließbar sind, mit einem zweiten Kupplungskörper, an dem jeweilige zweite Leitungsabschnitte anschließbar sind, weist die Kupplungsvorrichtung den ersten Kupplungskörper, den zweiten Kupplungskörper und jeweilige erste und zweite Anschlusseinheiten auf, wobei jede erste und zweite Anschlusseinheit in eine Aufnahmeöffnung in dem jeweiligen Kupplungskörper einsetzbar ist und zur Bildung einer Steckverbindung zwischen elektrische Leiter aufweisenden Leitungsabschnitten eine elektrische Verbindungseinrichtung mit stecker- und/oder buchsenartigen Kontaktelementen aufweist.

Anschlusseinheiten für eine Kupplungsvorrichtung sind aus CA 2 243 263 A1 und EP 1 471 610 A2 bekannt.

Ausgehend von diesem Stand der Technik stellt sich die Erfindung die Aufgabe, eine für das Verbinden von elektrischen Leitungsabschnitten vorgesehene Kupplungsvorrichtung zur Verfügung zu stellen, die sich durch eine einfach herstellbare, mechanisch robuste Bauweise auszeichnet.

Erfindungsgemäß ist diese Aufgabe durch eine Kupplungsvorrichtung gelöst, die die Merkmale des Patentanspruches 1 in seiner Gesamtheit aufweist.

Gemäß dem kennzeichnenden Teil des Anspruches 1 besteht eine wesentliche Besonderheit der Erfindung darin, dass jede Anschlusseinheit in der Art einer Patrone mit einem einteiligen, hülsenartigen Gehäuse ausgebildet ist, das einen die Verbindungseinrichtung aufnehmenden Durchgang aufweist, dass das Gehäuse der ersten Anschlusseinheit als Steckerelement ausgebildet ist und an dem die steckerartigen Kontaktelemente aufweisenden Ende einen an einer Stufe abgesetzten, verjüngten, zylindrischen Endbereich aufweist, und dass das Gehäuse der zweiten Anschlusseinheit als Buchsenelement ausgebildet ist, dessen Durchgang an dem die buchsenartigen Kontaktelemente aufweisenden Ende einen inneren, zylindrischen Abschnitt mit einem Innendurchmesser aufweist, der an den Außendurchmesser des verjüngten Endbereichs des Steckerelementes angepasst ist und am inneren Ende an einem radial nach innen vorspringenden Absatz in den anschließenden Teil des Durchgangs übergeht, so dass die Gehäuse beim Zusammenstecken der beiden Kupplungskörper teleskopartig zusammenfahren.

Gegenüber der bekannten Lösung des Standes der Technik (EP 2 620 688 A2), bei der die jeweilige Anschlusseinheit durch separate Elemente gebildet ist, die mittels einer Verschraubung miteinander verbunden sind, ermöglicht die erfindungsgemäße Bauweise mit patronenartigem, einstückigem Gehäuse eine rationellere und kostengünstigere Herstellung. Dadurch, dass die jeweilige Anschlusseinheit einen einheitlichen Baukörper bildet, vereinfachen sich zudem die bei der Benutzung der Anschlusseinheit beim Einbau in eine betreffende Kupplungsvorrichtung auszuführenden Handhabungs- und Montagevorgänge. Durch die einteilige Ausbildung des Gehäuses zeichnet sich die jeweilige Anschlusseinheit darüber hinaus durch eine mechanisch robuste Bauweise aus.

Erfindungsgemäß sind sowohl beim Steckerelement als auch beim Buchsenelement die Gehäuse an dem bei der Einbauposition dem gegenüberliegenden Kupplungskörper zugewandten Ende jeweils derart geformt, dass die Gehäuse beim Zusammenstecken der beiden Kupplungskörper teleskopartig zusammenfahren. Im Kupplungszustand sind daher die Kontaktelemente von Steckerelement und Buchsenelement durch eine über beide Kupplungskörper durchgehende Hülse umfasst und geschützt. Um ein teleskopartiges Ineinandergreifen zu ermöglichen, weist das Steckerelement an dem die steckerartigen Kontaktelemente aufweisenden Ende einen an einer Stufe abgesetzten, verjüngten innenzylindrischen Endbereich auf. An dem den verjüngten Endbereich übergreifenden Ende weist das Buchsenelement an dem die buchsenartigen Kontaktelemente aufweisenden Ende einen zylindrischen Abschnitt mit einem Innendurchmesser auf, der an den Außendurchmesser des verjüngten Endbereiches des Steckerelementes angepasst ist und am inneren Ende an einem radial nach innen vorspringenden Absatz in den anschließenden Teil des Durchganges übergeht. Bei Ausführungsbeispielen, bei denen die elektrische Verbindungseinrichtung im Gehäuse ohne Überstand der Kontaktelemente über die Enden des Durchganges aufgenommen ist, sind die Kontaktelemente besonders wirksam gegen äußere Krafteinwirkungen geschützt, die beispielsweise zu einem Verbiegen von Steckerpins führen könnten.

Mit besonderem Vorteil ist das hülsenartige Gehäuse aus einem metallischen Werkstoff gebildet, wobei die Verbindungseinrichtung für die Kontaktelemente Trägerteile aus Kunststoff aufweist. Derartige Kunststoffteile lassen sich beispielsweise durch Verklipsen mit im Durchgang des Gehäuses befindlichen Rasten sichern, so dass sich der Einbau der Verbindungseinrichtung in das Gehäuse rationell gestalten lässt.

Bei der erfindungsgemäßen Kupplungsvorrichtung bildet das Gehäuse der jeweiligen Anschlusseinheit einer ersten Art ein Steckerelement, das vorzugsweise in eine Aufnahmeöffnung im ersten Kupplungskörper einsetzbar ist. Bei dieser Ausbildung als Steckerelement weist die Verbindungseinrichtung an dem Ende, das bei der Einbauposition dem zweiten Kupplungskörper zugewandt ist, steckerartige Kontaktelemente auf.

In einer zweiten Art bildet das Gehäuse der jeweiligen Anschlusseinheit ein Buchsenelement, das vorzugsweise in eine Aufnahmeöffnung im zweiten Kupplungskörper einsetzbar ist. Hierbei weist die Verbindungseinrichtung an dem Ende, das bei der Einbauposition dem ersten Kupplungskörper zugewandt ist, buchsenartige Kontaktelemente auf. Steckerelement und Buchsenelement bilden dadurch beim Zusammenstecken der Kupplungskörper die elektrische Steckverbindung der Leitungsabschnitte.

Mit Vorteil kann die Anordnung so getroffen sein, dass das Steckerelement an dem den steckerartigen Kontaktelementen entgegengesetzten Ende buchsenartige Kontaktelemente aufweist, und dass das Buchsenelement an dem den buchsenartigen Kontaktelementen entgegengesetzten Ende steckerartige Kontaktelemente für den Anschluss eines betreffenden Leitungsabschnittes aufweist. Dergestalt bilden die Anschlusseinheiten sozusagen einen Zwischenstecker, der für den Anschluss der Leitungsabschnitte einerseits eine Steckbuchse und andererseits einen Stecker aufweist, so dass der Anschluss der Leitungsabschnitte wiederum auf einfache Weise mittels Steckverbindungen erfolgen kann.

Wenn vorteilhafterweise die axialen Längen des verjüngten Endbereichs des Steckerelementes und des zylindrischen Abschnittes des Buchsenelementes derart aneinander angepasst sind, dass bei zusammengesteckten Kupplungskörpern und teleskopartig zusammengefahrenen Gehäusen von Steckerelement und Buchsenelement das Ende des Gehäuses des letzteren an der Stufe des Steckerelementes und das Ende des verjüngten Endabschnittes des Steckerelementes am Absatz im zylindrischen Abschnitt des Buchsenelementes anliegen, sind die Gehäuse im teleskopartig zusammengefahrenen Zustand aneinander axial anliegend und dadurch gegen Axialbewegungen in Richtung gegeneinander in ihrer jeweiligen Aufnahmeöffnung im Kupplungskörper gesichert.

In vorteilhafter Weise können die Aufnahmeöffnungen im ersten und im zweiten Kupplungskörper und die Form der Außenseite des Gehäuses von Steckerelement und Buchsenelement derart geformt sein, dass diese von dem dem jeweils gegenüberliegenden Kupplungskörper zugewandten Ende der Kupplungskörper her in die zugeordnete Aufnahmeöffnung einsetzbar sind. Um hierbei Steckerelement und Buchsenelement bei zusammengesteckten Kupplungskörpern und endseitig aneinander liegenden Gehäusen in eindeutiger Axialposition festzulegen, genügt es, dass das Gehäuse von Steckerelement und Buchsenelement außenseitig jeweils mindestens ein radial vorspringendes Gehäuseteil aufweist, das in Zusammenwirkung mit einer Gestaltung der Wand der Aufnahmeöffnung die axiale Position des Gehäuses in eine Richtung vorgibt.

Weiterhin kann die Anordnung mit Vorteil so getroffen sein, dass ein radial vorspringendes Gehäuseteil von Steckerelement und Buchsenelement in Zusammenwirkung mit einer an der Innenwand der betreffenden Aufnahmeöffnung vorgesehenen Längsnut eine Drehposition für das Gehäuse vorgibt. Dadurch ist es sichergestellt, dass beim Zusammenstecken der Kupplungskörper die steckerartigen Kontaktelemente, wie Steckerpins, des Steckerelements auf betriebssichere Weise die Steckverbindung mit den buchsenartigen Kontaktelementen des Buchsenelementes herstellen.

Nachstehend ist die Erfindung anhand eines in der Zeichnung dargestellten Ausführungsbeispieles im Einzelnen erläutert.

Es zeigen:
Fig. 1 einen Längsschnitt einer erfindungsgemäßen Kupplungsvorrichtung in Form einer Mehrfachkupplung, die Anschlusseinheiten aufweist, wobei die Kupplungskörper der Kupplung in nur teilweise zusammengesteckter Position dargestellt sind;
Fig. 2 einen gegenüber der Fig. 1 in größerem Maßstab gezeichneten Längsschnitt, wobei ein Ausführungsbeispiel der erfindungsgemäß ausgebildeten Anschlusseinheit mit einem Gehäuse in Form eines Steckerelementes gezeigt ist; und
Fig. 3 einen der Fig. 2 entsprechenden Längsschnitt eines Ausführungsbeispieles der erfindungsgemäß ausgebildeten Anschlusseinheit mit einem Gehäuse in Form eines Buchsenelementes.

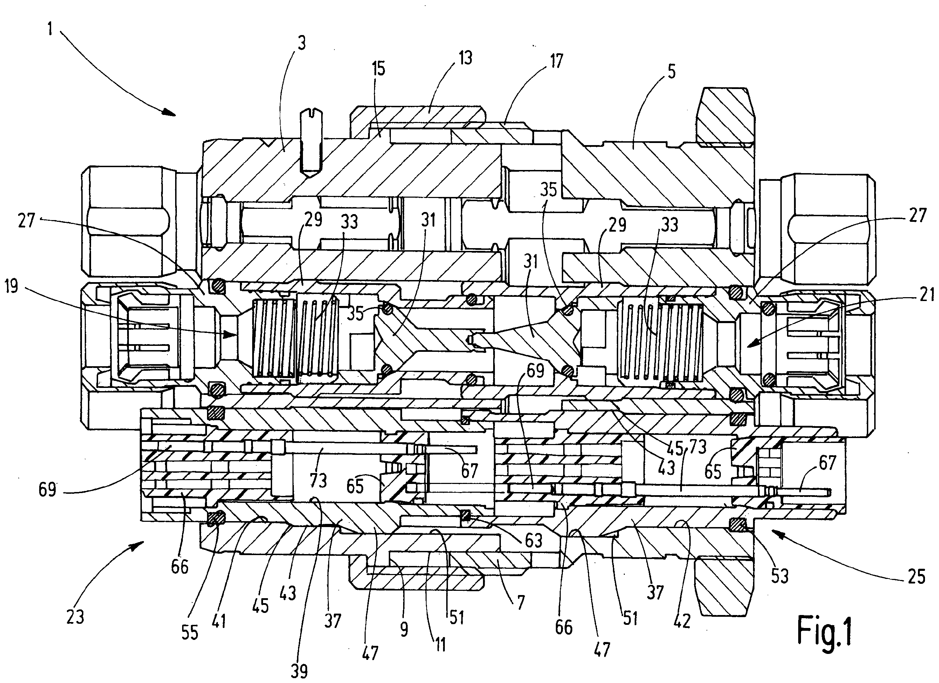

Die Fig. 1 zeigt eine Mehrfachkupplung 1 mit einem ersten Kupplungskörper 3 und einem zweiten Kupplungskörper 5, die zusammensteckbar sind, um gleichzeitig Leitungsabschnitte (die in der Zeichnung nicht dargestellt sind), die an den Kupplungskörpern 3 und 5 angeschlossen sind, mittels Steckverbindungen miteinander zu kuppeln. In Fig. 1 sind die Kupplungskörper 3 und 5 in lediglich teilweise zusammengesteckter Position dargestellt. Nach weiterem Zusammenfahren in die zusammengesteckte Kupplungsposition, wobei der zweite Kupplungskörper 5 mit seinem zylindrischen Endteil 7 zur Anlage an einer Anschlagschulter 9 der übergriffenen Außenseite 11 des ersten Kupplungskörpers 3 gelangt, sind die Kupplungskörper 3 und 5 aneinander mittels einer Überwurfmutter 13 festlegbar. Diese übergreift einen an der Außenseite des ersten Kupplungskörpers 3 vorspringenden Ringflansch 15, an dessen einer Seite sich die Anschlagschulter 9 befindet. Dabei ist die Überwurfmutter 13 mit einem Außengewinde 17 am Endteil 7 des zweiten Kupplungskörpers 5 in Eingriff.

Die Mehrfachkupplung 1 entspricht, was die Bauweise der Kupplungskörper 3 und 5 mit darin ausgebildeten Aufnahmeöffnungen für Anschlusseinheiten anbelangt, dem Stand der Technik, wie er in dem bereits erwähnten Dokument EP 2 620 688 A2 offenbart ist. Dies gilt auch für die Bauweise der in Fig. 1 mit 19 und 21 bezeichneten Anschlusseinheiten für Leitungsabschnitte, die strömungsfähige Medien wie Druckluft oder Flüssigkeiten führen, so dass sich die Beschreibung dieser aus dem erwähnten Dokument an sich bekannten Bauelemente auf die wesentlichsten Details beschränken kann. Zusätzlich zu diesen an sich bekannten Anschlusseinheiten sind in einigen der auf einer zur Kupplungsachse konzentrischen Kreislinie angeordneten Aufnahmeöffnungen, von denen beispielsweise acht vorgesehen sind, erfindungsgemäß ausgebildete Anschlusseinheiten vorgesehen, von denen eine, die im ersten Kupplungskörper 3 sitzt, mit 23 bezeichnet und ein als Steckerelement ausgebildetes Gehäuse aufweist. Eine im zweiten Kupplungskörper 5 sitzende und mit 25 bezeichnete Anschlusseinheit weist ein als Buchsenelement ausgebildetes Gehäuse auf.

Von den für strömungsfähige Medien vorgesehenen Anschlusseinheiten sind bei der Schnittdarstellung von Fig. 1 eine Anschlusseinheit 19 im Kupplungskörper 3 und eine Anschlusseinheit 21 im Kupplungskörper 5 sichtbar. Wie dargestellt, weisen beide Anschlusseinheiten 19, 21 ein dem Leitungsanschluss dienendes, äußeres Gehäuseelement 27 und ein mit diesem durch Verschraubung verbundenes zweites Gehäuseelement 29 auf. In diesen ist jeweils ein Ventilkörper 31 verschiebbar, der durch eine Ventilfeder 33 in die gezeigte Schließstellung vorgespannt ist, in der er an einem Ventilsitz 35 abdichtet. Bei weiterem Zusammenstecken der Kupplungskörper 3 und 5 kommt es durch das Aneinanderliegen der Ventilkörper 31 zum Öffnen des jeweiligen Ventils gegen die Schließkraft der Ventilfedern 33.

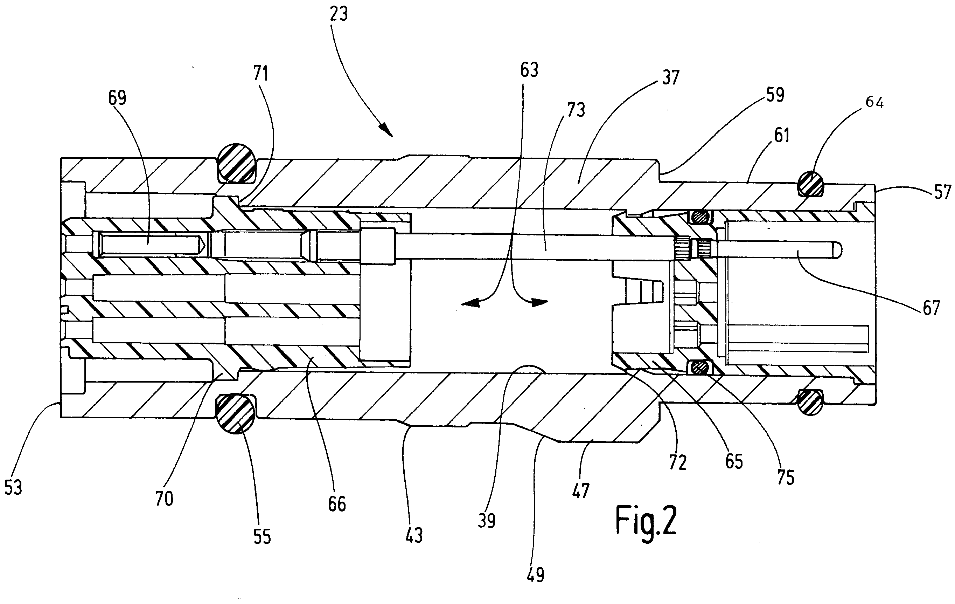

Das als Steckerelement 23 ausgebildete Gehäuse eines Ausführungsbeispiels der erfindungsgemäß ausgebildeten Anschlusseinheit ist in Fig. 2 gesondert dargestellt. Wie ersichtlich hat das Steckerelement 23 die Form einer Art Patrone mit einem einteiligen, metallischen Gehäuse 37 in Form einer Hülse, die an ihrer Außenseite kreiszylindrische Wandabschnitte und innenseitig einen Durchgang 39 mit ebenfalls kreiszylindrischen Innenwandabschnitten aufweist. Das Gehäuse 37 ist in eine Aufnahmeöffnung 41, die im ersten Kupplungskörper 3 durchgehend ausgebildet ist, von der in der Kupplung 1 innenliegenden Seite her, also von der dem zweiten Kupplungskörper 5 zugewandten Seite her, einsetzbar. Gegen eine Verschiebung aus der Einbauposition in Richtung zur Außenseite der Kupplung 1 weist das Gehäuse 37 außenseitig ein radial vorstehendes Gehäuseteil 43 auf, das in der Einbauposition an einer an der Innenwand der Aufnahmeöffnung 41 gebildeten Stufe 45 anliegt. Für die Sicherung des eingesetzten Gehäuses 37 in der richtigen Drehposition weist das Gehäuse 37 ein weiteres radial vorstehendes Gehäuseteil 47 auf, das einen V-förmigen Querschnitt besitzt und eine schrägverlaufende Kante 49 bildet, mit der das Gehäuseteil 47 in eine an der Innenwand der Aufnahmeöffnung 37 gebildete Längsnut 51 beim Einsetzvorgang einläuft, um die Drehposition festzulegen. In der Nähe des im Einbauzustand außenliegenden Endes 53 bildet ein in einer Ringnut der Gehäusewand sitzende O-Ring 55 die Abdichtung zur Aufnahmeöffnung 37.

In der Nähe des anderen Endes 57 geht die Außenseite des Gehäuses 37 an einer Stufe 59 in einen verjüngten, zylindrischen Endbereich 61 über, an dem in der Nähe des Endes 57 eine Ringnut als Sitz für einen weiteren O-Ring 64 ausgebildet ist.

Im Inneren des Durchganges 39 des Gehäuses 37 ist eine elektrische Verbindungseinrichtung 63 angeordnet. Diese weist für Kontaktelemente, die zur Bildung von Steckverbindungen an den Enden 57 und 53 des Gehäuses 37 zugänglich sind, Trägerteile 65 und 66 aus Kunststoff auf. Bei der in Fig. 2 gezeigten Ausbildung der Anschlusseinheit als Steckerelement 23, weist das Trägerteil 65 einen Kranz von Steckerpins 67 auf, von denen lediglich einer dargestellt ist und der Übersichtlichkeit halber weitere sieben auf einer Kreislinie angeordnete Pins weggelassen sind. Die am Ende 57 zugänglichen Steckerpins 67 bilden beim Zusammenstecken der Kupplungskörper 3 und 5 die Steckverbindung mit der als Buchsenelement 25 ausgebildeten Anschlusseinheit. Das andere Trägerteil 66 der Verbindungseinrichtung 63 weist eine entsprechende Anordnung buchsenartiger Kontaktelemente in Form von Steckbuchsen 69 auf, von denen wiederum lediglich eine des Kranzes aus acht Steckbuchsen dargestellt ist. Das zugehörige Trägerteil 66 ist vom Ende 53 her in den Durchgang 39 einsetzbar, wobei es mit einem umfänglichen Ringflansch 70 an einer Stufe 71 des Durchganges 39 anliegt und gegen eine axiale Verschiebung in Richtung auf das andere Trägerteil 65 festgelegt ist. Letzteres ist durch Verklipsen an einer Rastnase 72 des Durchganges 39 gegen eine Axialbewegung in Richtung auf das Ende 57 festgelegt. Gegenseitig sind die Trägerteile 65 und 66 über Leiterstäbe 73 miteinander verbunden, die auch die elektrische Verbindung zwischen Steckerpins 67 und Steckbuchsen 69 bilden. Als Abdichtung des Durchganges 39 ist in einer Ringnut des Trägerteiles 65 ein O-Ring 75 vorgesehen.

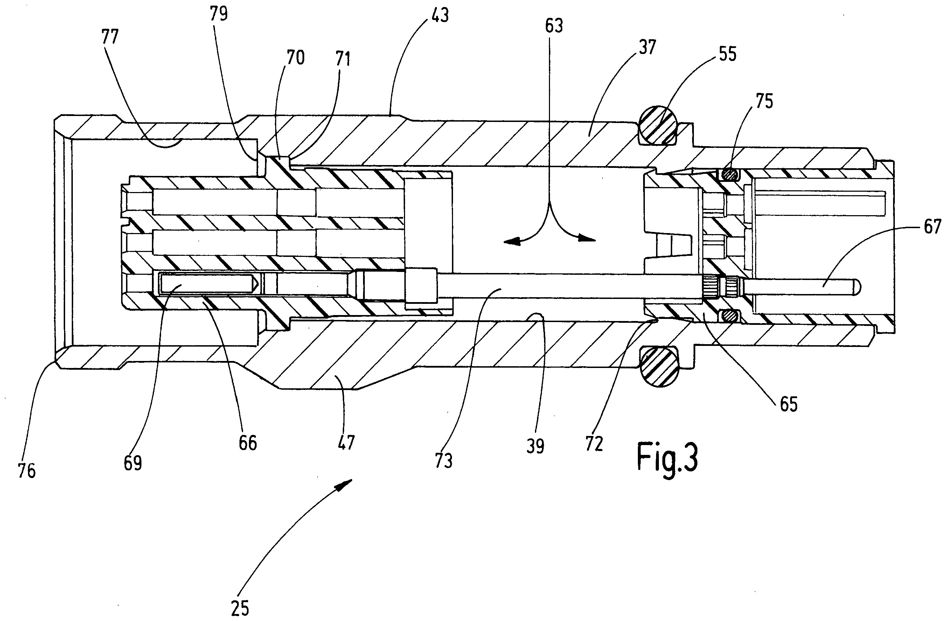

Das in Fig. 3 dargestellte Ausführungsbeispiel der erfindungsgemäß ausgebildeten Anschlusseinheit, die ein als Buchsenelement 25 ausgebildetes Gehäuse aufweist, ist, wie das Steckerelement 23, ebenfalls von der Innenseite der Kupplung 1 her in die zugeordnete Aufnahmeöffnung 42 im zweiten Kupplungskörper 5 einsetzbar. Das hülsenartige, einteilige Gehäuse 37 mit Durchgang 39 und darin angeordneter Verbindungseinrichtung 63 entspricht im Großen und Ganzen dem Steckerelement 23 von Fig. 2, so dass, soweit es sich um gleiche Einzelheiten handelt, die gleiche Bezugszahlen vorgesehen sind. Wie zuvor sind zur Festlegung der Axialposition sowie der Drehposition vorstehende Gehäuseteile 43 bzw. 47 in Zusammenwirkung mit entsprechenden Gestaltungen der Innenwand der Aufnahmeöffnung 42 vorgesehen. Ein wesentlicher Unterschied besteht jedoch darin, dass an dem Ende 76, das bei der Einbauposition in der Kupplung 1 innenseitig gelegen ist, im Durchgang 39 des Gehäuses 37 ein zylindrischer Abschnitt 77 gebildet ist, der eine Art Innenzylinder bildet, dessen Innendurchmesser an den Außendurchmesser des verjüngten Endbereiches 61 des Steckerelementes 23 angepasst ist. Beim Zusammenstecken der Kupplungskörper 3 und 5 fahren daher der Endbereich 61 des Steckerelementes 23 und der zylindrische Abschnitt 77 teleskopartig zusammen, wobei der O-Ring 64 die Abdichtung einer der Innenseite des zylindrischen Abschnittes 77 des Buchsenelements 25 bildet. Gleichzeitig kommt das Ende 57 bei völlig zusammengestecktem Zustand mit einem Absatz 79 am Ende des innenzylindrischen Abschnittes 77 zur Anlage.

Beim zusammengesteckten Zustand der Kupplung 1 bilden die teleskopartig zusammengefahrenen, als Steckerelement 23 und als Buchsenelement 25 gestalteten Gehäuse der Anschlusseinheiten praktisch einen Zwischenstecker, bei dem für den Anschluss der betreffenden Leitungsabschnitte an den Außenseiten einerseits die Steckbuchsen 69 des Steckerelements 23 und andererseits die Steckerpins 67 des Buchsenelementes 25 zur Verfügung stehen.

## Patentansprüche

1. Kupplungsvorrichtung, insbesondere eine Mehrfachkupplung (1), zum steckbaren Verbinden mindestens eines ersten Leitungsabschnitts mit einem jeweiligen zweiten Leitungsabschnitt durch Zusammenstecken eines ersten Kupplungskörpers (3), an den jeweilige erste Leitungsabschnitte anschließbar sind, mit einem zweiten Kupplungskörper (5), an den jeweilige zweite Leitungsabschnitte anschließbar sind, wobei die Kupplungsvorrichtung den ersten Kupplungskörper (3), den zweiten Kupplungskörper (5) und jeweilige erste und zweite Anschlusseinheiten (23, 25) aufweist, wobei jede erste und zweite Anschlusseinheit (23, 25) in eine Aufnahmeöffnung (41, 42) in dem jeweiligen Kupplungskörper (3, 5) einsetzbar ist und zur Bildung einer Steckverbindung zwischen elektrische Leiter aufweisenden Leitungsabschnitten eine elektrische Verbindungseinrichtung (63) mit Stecker- und/oder buchsenartigen Kontaktelementen (67, 69) aufweist, wobei jede Anschlusseinheit (23, 25) in der Art einer Patrone mit einem einteiligen, hülsenartigen Gehäuse (37) ausgebildet ist, das einen die Verbindungseinrichtung (63) aufnehmenden Durchgang (39) aufweist, dass das Gehäuse (37) der ersten Anschlusseinheit (23) als Steckerelement ausgebildet ist und an dem die steckerartigen Kontaktelemente (67) aufweisenden Ende einen an einer Stufe (59) abgesetzten, verjüngten, zylindrischen Endbereich (61) aufweist, und dass das Gehäuse (37) der zweiten Anschlusseinheit (25) als Buchsenelement (25) ausgebildet ist, dessen Durchgang (39) an dem die buchsenartigen Kontaktelemente (69) aufweisenden Ende einen inneren, zylindrischen Abschnitt (77) mit einem Innendurchmesser aufweist, der an den Außendurchmesser des verjüngten Endbereichs (61) des Steckerelementes (23) angepasst ist und am inneren Ende an einem radial nach innen vorspringenden Absatz (71) in den anschließenden Teil des Durchgangs (69) übergeht, so dass die Gehäuse (37) beim Zusammenstecken der beiden Kupplungskörper (3, 5) teleskopartig zusammenfahren.

2. Kupplungsvorrichtung nach Anspruch 1, **dadurch gekennzeichnet, dass** die Verbindungseinrichtung (63) im Gehäuse (37) ohne Überstand der Kontaktelemente (67, 69) über die Enden des Durchganges (39) aufgenommen ist.

3. Kupplungsvorrichtung nach Anspruch 1 oder 2, **dadurch gekennzeichnet, dass** das hülsenartige Gehäuse (37) aus einem metallischen Werkstoff gebildet ist und die Verbindungseinrichtung (63) für die Kontaktelemente (67, 69) Trägerteile (65, 66) aus Kunststoff aufweist.

4. Kupplungsvorrichtung nach einem der vorstehenden Ansprüche, **dadurch gekennzeichnet, dass** das Gehäuse der jeweiligen Anschlusseinheit einer ersten Art ein Steckerelement (23) bildet, das in eine Aufnahmeöffnung (41) im ersten Kupplungskörper (3) einsetzbar ist, wobei die Verbindungseinrichtung (63) an dem Ende, das bei der Einbauposition dem zweiten Kupplungskörper (5) zugewandt ist, die steckerartigen Kontaktelemente (67) aufweist.

5. Kupplungsvorrichtung nach einem der vorstehenden Ansprüche, **dadurch gekennzeichnet, dass** das Gehäuse der jeweiligen Anschlusseinheit einer zweiten Art ein Buchsenelement (25) bildet, das in eine Aufnahmeöffnung (42) im zweiten Kupplungskörper (5) einsetzbar ist, wobei die Verbindungseinrichtung (63) an dem Ende, das bei der Einbauposition dem ersten Kupplungskörper (3) zugewandt ist, die buchsenartigen Kontaktelemente (69) aufweist.

6. Kupplungsvorrichtung nach einem der vorstehenden Ansprüche, **dadurch gekennzeichnet, dass** die Verbindungseinrichtung (63) des Steckerelements (23) an dem den steckerartigen Kontaktelementen (67) entgegengesetzten Ende buchsenartige Kontaktelemente (69) für den Anschluss eines Leitungsabschnitts aufweist.

7. Kupplungsvorrichtung nach einem der vorstehenden Ansprüche, **dadurch gekennzeichnet, dass** die Verbindungseinrichtung (63) des Buchsenelements (25) an dem den buchsenartigen Kontaktelementen (69) entgegengesetzten Ende steckerartige Kontaktelemente (67) für den Anschluss eines Leitungsabschnitts aufweist.

8. Kupplungsvorrichtung nach einem der vorstehenden Ansprüche, **dadurch gekennzeichnet, dass** die axialen Längen des verjüngten Endbereichs (61) des Steckerelementes (23) und des zylindrischen Abschnittes (77) des Buchsenelementes (25) derart aneinander angepasst sind, dass bei zusammengesteckten Kupplungskörpern (3, 5) und teleskopartig zusammengefahrenen Gehäusen (37) von Steckerelement (23) und Buchsenelement (25) das Ende (76) des Gehäuses (37) des letzteren an der Stufe (59) des Steckerelementes (23) und das Ende (57) des verjüngten Endabschnittes (61) des Steckerelementes (23) am Absatz (79) im zylindrischen Abschnitt (71) des Buchsenelementes (25) anliegen.

9. Kupplungsvorrichtung nach einem der vorstehenden Ansprüche, **dadurch gekennzeichnet, dass** Steckerelement (23) und Buchsenelement (25) von dem dem jeweils gegenüberliegenden Kupplungskörper (3, 5) zugewandten Ende der Kupplungskörper (3, 5) her in die zugeordnete Aufnahmeöffnung (41, 42) einsetzbar sind.

10. Kupplungsvorrichtung nach einem der vorstehenden Ansprüche, **dadurch gekennzeichnet, dass** das Gehäuse (37) von Steckerelement (23) und von Buchsenelement (25) außenseitig jeweils mindestens ein radial vorspringendes Gehäuseteil (43) aufweist, das in Zusammenwirkung mit einer Gestaltung der Wand der Aufnahmeöffnung (41, 42) die axiale Position des Gehäuses (37) in eine Richtung vorgibt.

11. Kupplungsvorrichtung nach einem der vorstehenden Ansprüche, **dadurch gekennzeichnet, dass** ein radial vorspringendes Gehäuseteil (47) von Steckerelement (23) und Buchsenelement (25) in Zusammenwirkung mit einer an der Innenwand der betreffenden Aufnahmeöffnung (41, 42) vorgesehenen Längsnut (51) eine Drehposition für das Gehäuse (37) vorgibt.

## Claims

1. Coupling device, in particular a multiple coupling (1), for the pluggable connection of at least one first line section with a respective second line section by the plugging together of a first coupling body (3), to which respective first line sections can be connected, and a second coupling body (5), to which respective second line sections can be connected, wherein the coupling device comprises the first coupling body (3), the second coupling body (5), and respective first and second connection units (23, 25), wherein each first and second connection unit (23, 25) can be inserted into a reception opening (41, 42) in the respective coupling body (3, 5), and, in order to form a plug connection between line sections comprising electrical conductors, comprises an electrical connection device (63) with plug-type and/or sleeve-type contact elements (67, 69),
wherein each connection unit (23, 25) is configured in the form of a cartridge with a single piece sleeve-type housing (37), which comprises a passage (39) accommodating the connection device (63), the housing (37) of the first connection unit (23) is configured as a plug element, and, at the end comprising the plug-type contact elements (67), comprises a tapered, cylindrical end region (61) which is offset at a step (59), and the housing (37) of the second connection unit (25) is configured as a sleeve element (25), of which the passage (39) at the end comprising the sleeve-type contact elements (69) comprises an inner cylindrical section (77) with an inner diameter which is adjusted to the outer diameter of the tapered end region (61) of the plug element (23), and at the inner end, at a step (71) which projects radially inwards, merges into the connecting part of the passage (69), such that, when the two coupling bodies (3, 5) are plugged together, the housings (37) move together in a telescopic manner.

2. Coupling device according to claim 1, **characterised in that** the connection device (63) is accommodated in the housing (37) without any projection of the contact elements (67, 69) over the ends of the passage (39).

3. Coupling device according to claim 1 or 2, **characterised in that** the sleeve-type housing (37) is formed from a metallic material and the connection device (63) for the contact elements (67, 69) comprises carrier parts (65, 66) made of plastic.

4. Coupling device according to any one of the preceding claims, **characterised in that** the housing of the respective connection unit of a first type forms a plug element (23), which can be inserted into a reception opening (41) in the first coupling body (3), wherein the connection device (63) comprises the plug-type contact elements (67) at the end which, in the installation position, is facing towards the second coupling body (5).

5. Coupling device according to any one of the preceding claims, **characterised in that** the housing of the respective connection unit of a second type forms a sleeve element (25), which can be inserted into a reception opening (42) in the second coupling body (5), wherein the connection device (63) comprises the sleeve-type contact elements (69) at the end which, in the installation position, is facing towards the first coupling body (3).

6. Coupling device according to any one of the preceding claims, **characterised in that** the coupling device (63) of the plug element (23) comprises, at the end opposing the plug-type contact elements (67), sleeve-type contact elements (69) for the connection of a line section.

7. Coupling device according to any one of the preceding claims, **characterised in that** the coupling device (63) of the sleeve element (25) comprises, at the end opposing the sleeve-type contact elements (69), plug-type contact elements (67) for the connection of a line section.

8. Coupling device according to any one of the preceding claims, **characterised in that** the axial lengths of the tapered end region (61) of the plug element (23) and of the cylindrical section (77) of the sleeve element (25) are adjusted to one another in such a way that, when the coupling bodies (3, 5) are plugged together and the housings (37) of the plug element (23) and sleeve element (25) are telescopically run together, the end (76) of the housing (37) of the latter, at the step (59) of the plug element (23), and the end (57) of the tapered end section (61) of the plug element (23), come in contact at the tapered end section (61) of the plug element (23) at the step (79) in the cylindrical section (71) of the sleeve element (25).

9. Coupling device according to any one of the preceding claims, **characterised in that** the plug element (23) and sleeve element (25) of the end of the coupling bodies (3, 5), in each case facing towards the respective opposing coupling body (3, 5), can be inserted into the allocated reception opening (41, 42).

10. Coupling device according to any one of the preceding claims, **characterised in that** the housing (37) of the plug element (23) and the sleeve element (25) comprise on the outside in each case at least one radially projecting housing part (43), which, in interaction with a configuration of the wall of the reception opening (41, 42), determines the axial position of housing (37) in one direction.

11. Coupling device according to any one of the preceding claims, **characterised in that** a radially projecting housing part (47) of the plug element (23) and sleeve element (25), in interaction with a longitudinal slot (51) provided at the inner wall of the reception opening (41, 42), determines a rotational position for the housing (37).

## Revendications

1. Dispositif d'accouplement, notamment raccord (1) multiple, pour connecter de manière enfichable au moins une première section de ligne à une deuxième section de ligne par enfichage ensemble d'un premier corps (3) d'accouplement, auquel des premières sections de ligne respectives peuvent être raccordées, et d'un deuxième corps (5) d'accouplement, auquel peuvent être raccordées des deuxièmes sections de ligne respectives, le dispositif d'accouplement comportant le premier corps (3) d'accouplement, le deuxième corps (5) d'accouplement et des première et deuxième unités (23, 25) de connexion respectives, chaque première et deuxième unités (23, 25) de connexion pouvant être insérée dans une ouverture (41, 42) de réception dans le corps (3, 5) d'accouplement respectif et comportant, pour former une liaison par enfichage entre des sections de ligne comportant des conducteurs électriques, un dispositif (63) de connexion électrique ayant des éléments (67, 69) de contact du genre enfichage et/ou en forme de douille,
dans lequel chaque unité (23, 25) de connexion est formée à la manière d'un patron avec un boîtier (37) en forme de douille d'une seule pièce, qui comporte une entrée (39) recevant le dispositif (63) de connexion, dans lequel le boîtier (37) de la première unité (23) de connexion est réalisé sous la forme d'un élément d'enfichage et comporte, à l'extrémité où se trouvent les éléments (67) de contact en forme de fiche, une région (61) d'extrémité cylindrique rétrécie, formant un épaulement (59), et dans lequel le boîtier (37) de la deuxième unité (25) de connexion est réalisé à la manière d'un élément (25) en forme de douille, dont l'entrée (39), à l'extrémité où se trouve l'élément (69) de contact du type douille, a une section (77) cylindrique intérieure ayant un diamètre intérieur qui est adapté au diamètre extérieur de la région (61) d'extrémité rétrécie de l'élément (23) d'enfichage et se poursuit à l'extrémité intérieure en un échelon (71) faisant saillie radialement vers l'intérieur dans la partie de raccordement de l'entrée (69), de sorte que les boîtiers (37) se déplacent ensemble télescopiquement lors de l'enfichage ensemble des deux corps (3, 5) d'accouplement.

2. Dispositif d'accouplement suivant la revendication 1, **caractérisé en ce que** le dispositif (63) de connexion est reçu dans le boîtier (37) sans que les éléments (67, 69) de contact ne dépassent au-dessus des extrémités de l'entrée (39) .

3. Dispositif d'accouplement suivant la revendication 1 ou 2, **caractérisé en ce que** le boîtier (37) en forme de douille est réalisé en une matière métallique et le dispositif (63) de connexion comporte, pour les éléments (67, 69) de contact, des parties (65, 66) de support en matière plastique.

4. Dispositif d'accouplement suivant l'une des revendications précédentes, **caractérisé en ce que** le boîtier de l'unité de raccordement respective d'un premier type forme un élément (23) d'enfichage, qui peut être inséré dans une ouverture (41) de réception dans le premier corps (3) d'accouplement, le dispositif (63) de connexion comportant, à l'extrémité qui est tournée à l'opposé du deuxième corps (5) d'accouplement dans la position de l'installation, les éléments (67) de contact en forme de fiche.

5. Dispositif d'accouplement suivant l'une des revendications précédentes, **caractérisé en ce que** le boîtier de chaque unité de raccordement d'un deuxième type forme un élément (25) en forme de douille, qui peut être inséré dans une ouverture (42) de réception dans le deuxième corps (5) d'accouplement, le dispositif (63) de connexion comportant, à l'extrémité qui est à l'opposé du premier corps (3) d'accouplement dans la position de l'installation, les éléments (69) de contact en forme de douille.

6. Dispositif d'accouplement suivant l'une des revendications précédentes, **caractérisé en ce que** le dispositif (63) de connexion de l'élément (23) d'enfichage comporte, à l'extrémité tournée vers les éléments (67) de contact en forme de fiche, des éléments (69) de contact du genre douille pour la connexion d'une section de ligne.

7. Dispositif d'accouplement suivant l'une des revendications précédentes, **caractérisé en ce que** le dispositif (63) de connexion de l'élément (25) douille comporte, à l'extrémité tournée vers les éléments (69) de contact du genre douille, des éléments (67) de contact du genre fiche pour la connexion d'une section de ligne.

8. Dispositif d'accouplement suivant l'une des revendications précédentes, **caractérisé en ce que** les longueurs axiales de la région (61) d'extrémité rétrécie de l'élément (23) en forme de fiche et de la section (77) cylindrique de l'élément (25) en forme de douille sont mutuellement adaptées de sorte que, lors de l'enfichage ensemble des corps (3, 5) d'accouplement et du déplacement ensemble de manière télescopique des boîtiers (37) de l'élément (23) en forme de fiche et de l'élément (25) en forme de douille, l'extrémité (76) du boîtier (37) de ce dernier s'applique à l'épaulement (59) de l'élément (23) en forme de fiche et l'extrémité (57) de la section (61) d'extrémité rétrécie de l'élément (23) en forme de fiche s'applique à l'épaulement (79) dans la section (71) cylindrique de l'élément (25) en forme de douille.

9. Dispositif d'accouplement suivant l'une des revendications précédentes, **caractérisé en ce que** l'élément (23) en forme de fiche et l'élément (25) en forme de douille peuvent être insérés dans l'ouverture (41, 42) de réception associée à partir de l'extrémité des corps (3, 5) d'accouplement tournée vers le corps (3, 5) d'accouplement respectif qui lui fait face.

10. Dispositif d'accouplement suivant l'une des revendications précédentes, **caractérisé en ce que** le boîtier (37) de l'élément (23) en forme de fiche et de l'élément (25) en forme de douille comportent chacun du côté extérieur au moins une partie (43) de boîtier faisant saillie radialement, qui, en coopération avec une formation de la paroi de l'ouverture (41, 42) de réception, donne à l'avance la position axiale du boîtier (37) dans une direction.

11. Dispositif d'accouplement suivant l'une des revendications précédentes, **caractérisé en ce qu'**une partie (47) de boîtier faisant saillie radialement de l'élément (23) en forme de fiche et de l'élément (25) en forme de douille donne à l'avance, en coopération avec une rainure (51) longitudinale ménagée dans la paroi intérieure de l'ouverture (41, 42) de réception correspondante, une position de rotation pour le boîtier (37).
